# EUROPEAN PATENT APPLICATION

(11) **EP 0 982 702 A1**
(43) Date of publication of application: **01.03.2000**
(21) Application number: 99306392.4
(22) Date of filing: 16.08.1999
(51) Int. Cl.: G09B 17/00, G09B 19/00, G09B 1/32, G09B 3/02, G09F 19/14, G03B 25/02

(54) **Educational aid or the like**

(30) Priority: 27.08.1998 GB 9818584
(71) Applicant: Millar Enterprises Ltd., Leicester LE5 4NN (GB)
(72) Inventor: Millar, Daksha, Leicester LE2 1RT (GB)
(74) Representative: Spoor, Brian

(57) **Abstract**

An educational aid or the like is provided based on the known alternative image presentation or display device in which one or another image is seen according to the direction or angle from which the device is viewed. The device is shown of card form (1) having a front transparent facing sheet (2) which is finely serrated with lenticular or prismatic serrations or ridges (20) in register with alternate image fine line printing of the device for alternative viewing of the images. The alternative images so provided have a relationship or association between them for educational or similar purposes especially, but not exclusively, for teaching the letters of the alphabet and the alphabet itself. Thus an image (3) of a letter "C" can be changed by tilting the card (1) to or from the image (4) of a cat together with the changing of associated wording (5,6). Sets or series of cards can be provided e.g. for use in conjunction with a marked out board or chart. Various other forms and practical applications of the invention are described.

## Description

The object of this invention is to provide a simple and effective educational aid or the like primarily, but not exclusively, for use by children and which basically consists of a novel application of known alternative image presentation or display devices as hitherto used for advertising purposes.

In such devices alternative image application or printing in alternate fine line form is provided at the rear of a front transparent facing sheet for co-operation with a finely serrated or ridged front surface of the facing sheet. The serrations or ridges of the latter are of lenticular or prismatic form in register or similar relationship with the alternate fine line image application or printing whereby alternative presentation of different images is provided according to the direction or angle from which the front facing sheet is viewed.

According to this invention the arrangement of the educational aid or the like is such that at least one image presented by the device in the above mentioned manner is associated with an alternatively presented image or images in providing a relationship or association between them for educational or similar purposes.

The alternative images may be pictorial and/or of other matter whilst additional matter may be included with the images.

Thus further in accordance with the invention additional matter such as wording to the alternative images is also provided in the same manner for alternative presentation in accordance with the alternative image presentation.

The alternate image fine line application or printing may be effected on the rear face of the front transparent facing sheet or on a backing sheet to the latter which is preferably of card form e.g. of plastic material. In either event the front facing sheet should be reinforced by a backing sheet or card for suitable rigidity.

By way of example and in a practical application of the invention as an alphabet teaching aid for young children reference is made to the accompanying drawings in which :-
- Figures 1 and 2: are each front face views of the device or card respectively showing the alternative images presented together with additional wording, and
- Figures 3: is a detail front face view of the devices or cards in the form of interfitting jigsaw pieces.

Referring to the drawings the front face of the transparent facing sheet 2 of the device or card 1 is finely serrated or ridged overall as partially indicated at 20. In the manner already referred to the serrations or ridges 20 are of lenticular or prismatic form in register with alternate image fine line application or printing at the rear of the front facing 2 such as on the card 1.

The fine line form image application or printing and serrations or ridges 20 are preferably arranged to run horizontally from side to side of the card 1 and front facing 2 in the manner shown for alternative image viewing purposes by appropriate upward or downward tilting of the card. However, the fine line printing and serrations or ridges may be otherwise arranged e.g. vertically for alternative image viewing by turning the card from side to side.

The alternative images can be attractively produced in colour and the front facing 2 can be suitably tinted for this purpose.

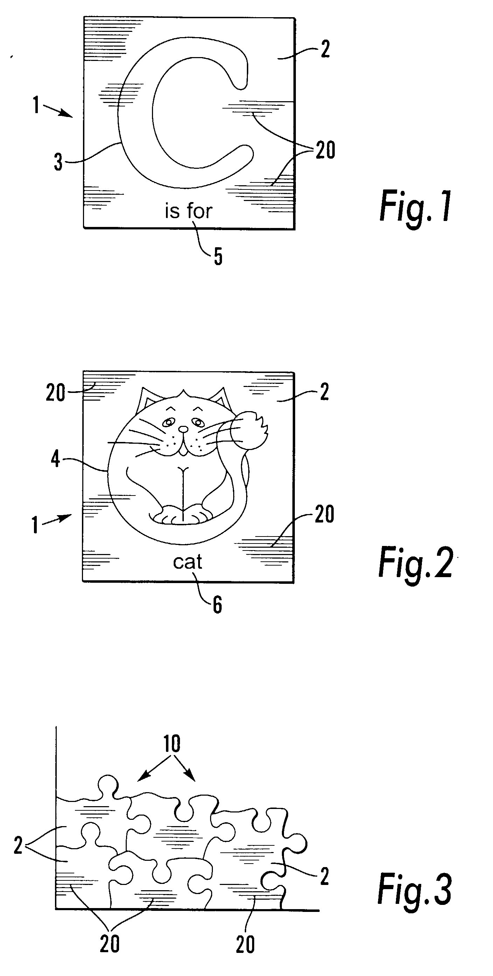

For teaching the alphabet the complete teaching aid may consist of a set or series of twenty-six cards, each one showing a particular letter of the alphabet. Thus in the case of the letter "C" it is initially presented on viewing the card in the normal manner as at 3 in Figure 1, but on tilting the card backwardly or fonvardly, an alternative associated image or picture 4 of a cat is shown as in Figure 2 so that the educational message given is "C is for Cat". Similarly other cards of the set would present other letters e.g. from "A is for Apple" through to "Z is for Zebra".

At the same time as such alternative image presentation any additional matter such as wording 5, 6 may change in the same way. Thus as "C" changes to the cat image the words "is for" changes to the word "cat".

By quick tilting operation ofthe card virtually instant changing of the alternative images from one to the other is obtained and also of any wording whereas by slow tilting movement gradual changing or "melting" from one image to the other is effected.

As will be appreciated the alternative images are presented in a fascinating manner of particular appeal to young children of kindergarten or similar junior school level. More than one letter and corresponding pictorial image may be provided on a single card e.g. in strip form. The letters may be of upper case form or lower case form or presented together in both forms or arranged to change from one form to the other.

By way of further educational aid the back of the card may carry a description of the or each animal or other item or items shown in the pictorial image or images. In the case of young children such description would be in simple terms for either reading to them or being read by them as their learning ability develops. Thus in the case of the "C" and cat card, the description may for example read "I drink milk and I love being stroked".

Particularly in the case of a set or series of such alphabetic cards, a board or chart of suitable sheet material e.g. strong paper or plastic material may be provided which is preferably marked out such as in squares for laying out the cards in alphabetical order and thus assist in teaching the alphabet. This may take the form of a game.

The set of the letter cards also have a further use in making up words for the purpose of teaching spelling especially of an elementary nature.

Numbers may be also presented in a similar manner for teaching basic numeracy e.g. initially as a simple sum (addition or subtraction) with the alternative image giving the answer.

Several such sums and answers can be displayed by means of a single card of a convenient size and set of them whilst other arithmetical operations such as multiplication and division can be similarly catered for.

In further practical applications of the invention the education provided can be of a historical or like nature of interest to both young and adult people.

Thus in the case of aircraft, especially military aircraft, the first image may depict the aircraft itself and the second image may show its typical mode of use or operation. For example a fighter aircraft such as a World War II RAF "Spitfire" can be shown first followed by an alternative illustration of it in aerial combat. Historical information of the aircraft may be also printed on the back of the card. A series of such cards covering various types of aircraft can be provided and also series or sets in numerous other fields of interest such as of railway locomotives, motor vehicles, ships, historic buildings, sport, the theatre and cinema and so on.

Further in this regard a set of cards depicting famous persons and their achievements can be provided. Thus famous inventors and their inventions would be of educational interest with the first image showing a portrait of the inventor (e.g. George Stephenson) and the alternative image his notable invention (viz, the "Rocket" steam locomotive). Here again relevant historic information can be provided on the back of the card.

It will also be appreciated that sets of cards especially of the above-mentioned historic or similar nature would have a wide appeal and may well become collectors' items.

In a further development of the invention and as shown in Figure 3 a set of devices or cards can be in the form of interfitting jigsaw or like puzzle pieces 10 with all the advantages and appeal of the devices or cards 1 described above. Thus a completed or interfitting assembly of the pieces may present an image or picture or more than one thereof when viewed from one direction and an associated alternative image or images or the like when viewed from another appropriate direction in the manner already described. The pieces 10 may be produced by any suitable means e.g. cutting or punching out.

Thus the completed assembly may show in one presentation the letters of the alphabet e.g. as a set from A to Z in alphabetical order and the alternative presentation of associated images or pictures of corresponding animals or other items together with any additional changing matter such as wording. Again in the manner already indicated a wide variety of educational presentation can also be provided e.g. of historic military or other interest.

As will be generally apparent from the foregoing an educational aid or the like as herein described and defined is of unique appeal to young and old and is capable of attractive and colourful presentation for use in various fields of education including general interest of a particularly informative nature.

The educational aid or the like can also be produced in forms suitable for use in languages other than English.

## Claims

1. An educational aid comprising at least one alternative image presentation device (1) in which alternative image application or printing in alternate fine line form is provided at the rear of a front transparent facing sheet (2) for co-operation with a correspondingly finely serrated or ridged front surface (20) of said facing sheet (2), the fine serrations or ridges (20) of the latter being of lenticular or prismatic form in register or similar relationship with said alternate fine line image application or printing whereby alternative presentation of different images (3, 4) is provided according to the direction or angle from which the front facing sheet (2) is viewed, characterised by one or more images (3) presented by the device (1) in the above manner is associated with an alternatively presented image or images (4) by the device (1) in providing a relationship or association between them for educational or similar purposes.

2. An educational aid or the like according to claim 1 wherein additional matter such as wording (5, 6) to the alternative images (3, 4) is also provided for alternative presentation in the same manner as the images (3, 4) and in accordance with the alternative image presentation.

3. An educational aid or the like according to claim 1 or 2 wherein the device (1) is of card form.

4. An educational aid or the like according to any of the preceding claims 1 to 3 wherein one of the alternative images presented is a letter (3) or letters of the alphabet and another alternative image is a pictorial representation of an animal or other item or items (4) with which the or each letter (3) has a relationship or association for the purpose of teaching the letters of the alphabet and the order of the alphabet itself.

5. An educational aid or the like according to any of the preceding claims 1 to 3 wherein one of the alternative images presented is a representation of a number or numbers and another alternative image presents associated numerical matter for the purpose of teaching basic numeracy such as at least one simple arithmetical operation e.g. addition, subtraction, multiplication or division.

6. An educational aid or the like according to any of the preceding claims 1 to 3 wherein one of the alternative images presented is a representation of a historical or other item and another alternative image presents an alternative representation of the item such as in a typical mode of use or operation for general educational information or interest.

7. An educational aid or the like according to any of the preceding claims 1 to 3 wherein one of the alternative images presented is a representation of a famous person such as an inventor and another alternative image presents an alternative representation of his or her notable achievement or invention or more than one thereof.

8. An educational aid or the like according to any of the preceding claims 1 to 7 wherein it comprises a plurality of devices (1) e.g. of card form and each in the form of an interfitting jigsaw or like puzzle piece (10) whereby a completed or interfitting assembly of such pieces presents one or more images and any additional matter thereto and alternatively presents a further associated image or image and any further additional matter thereto for educational or similar purposes.

9. An educational aid or the like according to any of the preceding claims 1 to 7 wherein it comprises a set or series of devices (1), eg of card form each providing a different alternative image presentation.

10. An educational aid or the like according to claims 4 and 9 wherein each device (1) or card of the set or series thereof present at least one different letter (3) of the alphabet and alternatively presents at least one associated pictorial representation of an animal or other item or items (4) with which the letter has a relationship or association for the purpose of teaching the letters of the alphabet and especially the order of the alphabet itself.
